# EUROPEAN PATENT SPECIFICATION

(11) **EP 3 814 210 B1**
(45) Date of publication and mention of the grant of the patent: **02.08.2023**
(21) Application number: 19740037.7
(22) Date of filing: 25.06.2019
(51) Int. Cl.: B62J 17/06, B60J 7/12

(54) **ELECTRIC VEHICLE WITH A WEATHER PROTECTION**
ELEKTROFAHRZEUG MIT EINEM WETTERSCHUTZ
VÉHICULE ÉLECTRIQUE DOTÉ D'UNE PROTECTION CONTRE LES INTEMPÉRIES

(30) Priority: 26.06.2018 FI 20185571
(43) Date of publication of application: 05.05.2021
(73) Proprietor: Pintone Oy, 90630 Oulu (FI)
(72) Inventor: AIRAKSINEN, Pentti, 90630 OULU (FI)
(74) Representative: Berggren Oy
(86) International application number: PCT/FI2019/050491
(87) International publication number: WO 2020/002769

(56) References cited:
- EP-A1- 3 147 142
- WO-A1-2009/077548
- DE-B- 1 007 646
- FR-A1- 2 701 687
- US-A- 1 802 807
- US-B1- 6 676 188
- Wenstedt Joop: "Cursor", , 25 March 1993 (1993-03-25), pages 1-12, XP055887975, Retrieved from the Internet: URL:https://www.cursor.tue.nl/fileadmin/us er_upload/magazine/jaargangen/35/nl/28.pdf [retrieved on 2022-02-07]
- Anonymous: "The Left-handed Cyclist: The Sinclair C5 to the Organic Transit Elf: Pedalectric Identity Crisis", , 3 June 2014 (2014-06-03), XP055885619, Retrieved from the Internet: URL:http://lefthandedcyclist.blogspot.com/ 2014/06/the-sinclair-c5-to-organic-transit -elf.html [retrieved on 2022-01-31]

## Description

The present invention relates to electric vehicles comprising an enclosed frame with an open area for a driver, which vehicles comprises a separate weather protective cover for the open area and has a steering arrangement with specific characteristics. Many different types of electric vehicles are known in the art, such as electric cars, sleds, scooters, bikes and trikes. Some of these electric vehicles are equipped with fixed cover for the driver and passengers, and others, like bikes, comprises at least partially exposed area for the driver.

The partially exposed area for the driver makes the driving experience, and thus the usability of the electric vehicle somewhat restricted in demanding weather conditions, such as in winter and in rain, for example.

In electric vehicles the heating of the driver and keeping the windshield and windows transparent and keeping them from fogging up in these demanding conditions, such as during winter, drains the batteries and thus effectively reduces the operating time of the electric vehicle.

Thus, there is a need for effective weather cover for the lighter electric vehicles not equipped with a fixed enclosure for the driver.

Publication US 5,662,372 discloses a flexible weather protective vehicle cover structure, which covers the driver and the vehicle, such as motorcycle, at their upper portions leaving the lover portion of the wheels exposed to be able to be in unhindered contact with road. The cover structure also comprises closable opening through which the driver can enter inside the cover structure or reach out legs or hands when needed. The cover structure in this solution is substantially large since it envelopes substantially the whole vehicle together with the driver. The various lights and alarm lamps are complicated to cover or are left uncovered. The rotating wheels and other moving or projecting vehicle parts are subject to grip of the cover making the solution very demanding to design and to use.

One known vehicle provided with a weather protective cover is an Alleweder tricycle developed by Bart Verhees and later produced and sold by Flevobikes. Other known vehicle with fabric weather protection is Sinclair C5, which was and electric assisted pedal vehicle. Said Sinclair C5 is a vehicle according to the preamble of claim 1.

The present invention provides an electric vehicle with a weather protective cover made of fabric, which provides protection for the driver even at demanding weather conditions such as during winter, and which is easy to use. Further, the electric vehicle of the invention allows sufficient weather protection for the driver without any additional energy consumption and allows advantageous driving geometry.

The electric vehicle with a weather protection of the invention comprises electric propulsion means and wheels for moving the vehicle, steering means and a body defining a closed outer surface with an open area for a driver at the upper portion of the body, and a weather protective fabric cover that is adapted to cover the open area and the driver located in the open area with the exception of the head of the driver, wherein
- the body defining the closed outer surface forms a fixed weather protected entity with a convex continuous surface at the front of the open area and with a protruding collar at least partially circulating the rim of the rest of the open area,
- the steering means comprises a shaft connecting a front wheel located outside of the body and a steering device located at least partially inside the body, which shaft is inclined in an angle below 45° in relation to horizontal ground level, and
- the outer surface of the body is equipped with means for fixing the weather protective fabric cover.

In the electric vehicle of the invention the body defining the closed outer surface advantageously comprises a sled-type bottom part with bottom and side surfaces, and a convex-shaped front piece attached on the front portion of the bottom part and defining the covered front section of the body. The rear part of the bottom part after the front piece forms the open area of the body, which is covered with the weather protective fabric cover. The body is advantageously made some suitable plastic or composite material, but can also be made from metal or wood, for example. The closed outer surface of the body is also advantageously formed as a watertight entity.

In the present invention the weather protective fabric cover is advantageously formed from a water-resistant fabric material such as the fabric materials used in tents. Other suitable water-resistant fabric materials include Gore-Tex^{®} fabrics, for example.

In the present invention the steering device is advantageously in the form of a handle-bar comprising the necessary brake and throttle handles for controlling the speed of the vehicle. Alternatively, the steering device can be in form of a steering wheel, for example. The brake and throttle handles can also be replaced with pedals.

In the present invention the weather protective fabric cover advantageously covers substantially only the open area of the body of the vehicle and extends to the outer surface area of the body only in the extent that is required by fixing it at its place in relation to the body. Thus, the lights, signal lamps and reflectors of the vehicle can be left outside of the cover, which significantly simplifies the cover itself and enhances its usability.

In an embodiment of the electric vehicle of the invention the means for fixing the weather protective fabric cover guides and tightens the front periphery of the weather protective fabric cover against the convex continuous surface of the vehicle body at the front of the open area. These means may include suitable extrusions at the outer surface of the body, such as pegs, hooks, springs or combinations of these, for example, or these means may be formed as grooves in the outer surface, for example.

In an embodiment of the electric vehicle of the invention a flexible section is provided at the periphery of the weather protective fabric cover. This can be in form of one or more flexible bands sewn in the periphery of the weather protective fabric cover. Alternative, the flexible section may be provided with a flexible band sewn inside the periphery of the weather protective fabric cover, sectionally or around the whole cover, for example.

In an embodiment of the electric vehicle of the invention the weather protective fabric cover comprises an opening for the head of the driver, and optionally also separate openings for the heads of the passengers. Further, these openings are advantageously provided with hoods for the head of the driver or passengers.

In an embodiment of the electric vehicle of the invention the electric vehicle of the invention is a three-wheel trike, with one steerable front wheel and two rear wheels. This allows for a good support for the vehicle without the need for additional actions from the driver at different types of operational situations, without loosing the good maneuverability characteristics.

In an embodiment of the electric vehicle of the invention the shaft connecting the front wheel and the steering device is advantageously between 30 and 42°, and the ratio of the width of the front wheel to the diameter of the front wheel is between 2,5-3,5. Further, the distance from the front wheel to the rear wheels in relation to the diameter of the front wheel is advantageously in the range of 4-7. This allows exceptionally good steering geometry, since the steering front wheel tilts more than changes direction when the wheel is turned, causing with a wide tire a self-centering steering geometry.

In the above embodiment of the present invention the small front wheel is advantageously located below and completely outside the body of the vehicle and operated with a shaft extending through the front bottom portion of the body, thus allowing the steering axis defined by the shaft to be at an angle below 45° in relation to the horizontal ground level. When turning the front wheel, the wheel tilts more than changes direction, causing mild behavior close to the central position making the steering slow close to the straight wheel position. This makes driving stable at high speeds. However, when the front wheel is turned significantly away from the straight wheel position, a strong progressive steering effect is achieved allowing turning of the vehicle in a significantly small turning radius.

Further, in this embodiment the watertight seal between the steering shaft and the body of the vehicle is easily achievable, with a suitable sealing piece, for example.

With this kind of solution, it is possible to make the handle-bar exceptionally narrow to fit it inside the walls of the body of the vehicle and to allow it to be operated without hitting the walls or the legs of the driver. Further, this solution allows for making of a small aerodynamically clean electric vehicle with a low center of gravity, which is safe and stable in turns and slopes, or when the rear wheel of the vehicle hits obstacles.

More precisely the features defining an electric vehicle in accordance with the present invention are presented in claim 1. Dependent claims present advantageous features and embodiments of the invention.

Exemplifying embodiment of the invention and its advantages are explained in greater detail below in the sense of example and with reference to accompanying drawings, where
Figures 1A-1B show schematically an embodiment of an electric vehicle of the invention without a weather protective fabric cover.
Figure 2 shows schematically the embodiment of figures 1A-1B with a weather protective fabric cover and driver.

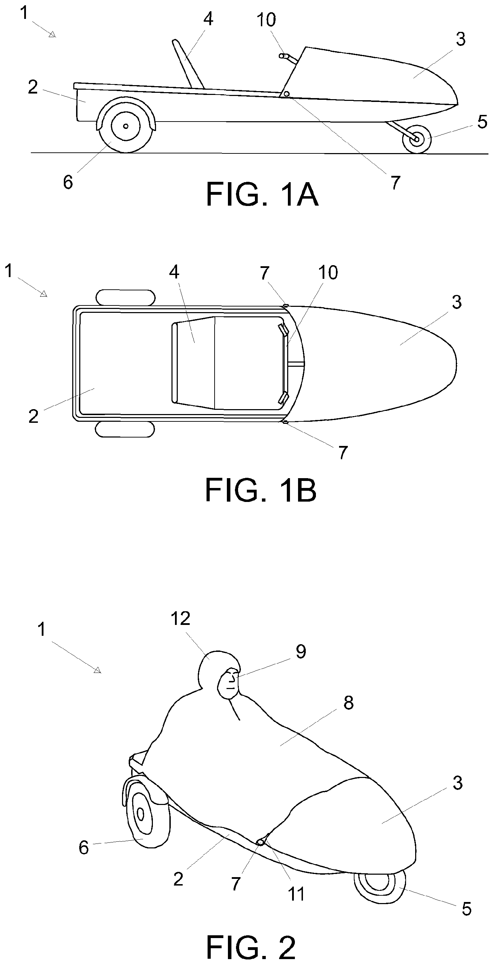

Figures 1A and 1B show schematically an embodiment of an electric vehicle 1. Figure 1A shows the electric vehicle 1 as a side view and figure 1B shows the electric vehicle as a top view.

The electric vehicle 1 shown in figures comprises a body formed from bottom part 2 onto which at the front end is attached a convex-shaped front piece 3. The bottom part 2 is formed as a sledge, with bottom and side surfaces to provide a simple and water tight bottom portion of the vehicle 1. The convex-shaped front piece 3 is fixed on top of the side surfaces of the bottom part 2 to form a closed and watertight front section of the body. In this closed section of the body is located the steering parts and the battery for the electric motors.

The bottom part 2 and the front piece 3 are in this embodiment formed from suitable plastic. Alternatively, suitable composite, metal or wood materials may be used.

The area on the bottom part 2 after the closed front piece 3 is left open for the driver.

In the open area of the body is located a seat 4 for the driver, which seat is fixed at the bottom of the bottom part 2. The seat 4 is located in the open area of the body so, that the feet of the driver are placed inside the closed section of the body under the front piece 3.

The electric vehicle 1 is in this embodiment a trike, having one front wheel 5 and two rear wheels 6. The electric drive motors are located in this embodiment in the rear wheels 6. The front wheel 5 can also be equipped with an electric motor. Alternatively, a separate electric motor within the bottom part 2 of the body or in a shaft connecting the rear wheels 6, for example, can be used.

The front wheel 5 is turned with a handlebar 10, which handlebar is equipped with handles for controlling the throttle and brakes of the vehicle 1. All or some of the handles in the handlebar 10 can be substituted with pedals inside the front portion of the vehicle 1 to be operated with the feet of the driver.

On the lower rear areas of the front piece 3 at both sides is arranged fixing points 7 for a weather protective fabric cover 8 (shown in figure 2). The fixing points 7 are in this embodiment formed as pegs having larger cross-section at their outer end and smaller cross-section between the outer end and the connection point to the surface of the front piece 3. Alternatively, the fixing points 7 can be formed as grooves, hooks, springs or combinations of these, for example.

Figure 2 shows schematically the electric vehicle 1 of figures 1A-1B with a weather protective fabric cover 8 fixed at its place covering a driver 9 of the vehicle.

In this embodiment, the driver 9 first inserts the back portion of the weather protective fabric cover 8 over the rear end of the bottom part 2 of the body, where the rear periphery of the cover attaches itself over the outside protruding outer upper edge of the bottom part. Then the driver 9 sits in the seat 4 and inserts his/her head through an opening arranged for it in the weather protective fabric cover 8. As a last action, the driver 9 inserts strip members 11, located at the areas of the openings of the front periphery of the cover 8, over the pegs at the fixing points 7, and this way tightens the front periphery of the cover 8 between the fixing points 7 against the convex outer surface of the front piece 3. At the same time the sides and rear parts are tightened forming a sealing against water splashes. The sides and the back portion of the weather protective fabric cover 8 are not tightly pressed against the outer surface of the body thus allowing moisture and sweat to be ventilated out from the area covered with the fabric cover.

The weather protective fabric cover 8 in this embodiment is also equipped with a hood 12, so that the driver can also cover his/her head and only the face is exposed. The weather protective cover may also be provided with additional openings and hoods for passenger(s) if a room for them in provided inside the open area of the body.

The specific exemplifying embodiment of the invention shown in figures and discussed above should not be construed as limiting. A person skilled in the art can amend and modify the embodiment of the invention described in many evident ways within the scope of the attached claims. Thus, the invention is not limited merely to the embodiment described above.

## Claims

1. Electric vehicle (1) with a weather protection, which vehicle comprises electric propulsion means and wheels (5, 6) for moving the vehicle, steering means (10) and a body (2, 3) defining a closed outer surface with an open area for a driver (9) at the upper portion of the body, and a weather protective fabric cover (8) that is adapted to cover the open area and the driver located in the open area with the exception of the head of the driver, wherein
- the body (2, 3) defining the closed outer surface forms a fixed weather protected entity with a convex continuous surface at the front of the open area and with a protruding collar at least partially circulating the rim of the rest of the open area,
- the steering means comprises a shaft connecting a front wheel (5) located outside of the body (2, 3) and a steering device (10) located at least partially inside the body, and
- the outer surface of the body (2, 3) is equipped with means (7) for fixing the weather protective fabric cover (8), **characterised in that** said shaft is inclined in an angle below 45° in relation to horizontal ground level.

2. Electric vehicle (1) according to claim 1, wherein the means (7) for fixing the weather protective fabric cover (8) guides and tightens the front periphery of the weather protective fabric cover against the convex continuous surface at the front of the open area.

3. Electric vehicle (1) according to claim 1 or 2, wherein a flexible section is provided at the periphery of the weather protective fabric cover (8).

4. Electric vehicle (1) according to any of claims 1-3, wherein the weather protective fabric cover (8) comprises an opening for the head of the driver (9), and also separate openings for the heads of the passengers.

5. Electric vehicle (1) according to claim 4, wherein each of the openings are provided with a hood (12).

6. Electric vehicle (1) according to any of claims 1-5, wherein the closed outer surface of the body (2, 3) of the electric vehicle (1) is watertight with the exception of the open area for the driver (9).

7. Electric vehicle (1) according to any of claims 1-6, wherein the electric vehicle is a trike.

8. Electric vehicle (1) according to any of claims 1-7, wherein the angle of the shaft connecting the front wheel (5) and the steering device (10) is between 30 and 42°.

9. Electric vehicle (1) according to any of claims 1-8, wherein the ratio of the width of the front wheel (5) to the diameter of the front wheel is between 2,5-3,5.

10. Electric vehicle (1) according to any of claims 1-9, wherein the ratio of the distance between the front wheel (5) and rear wheels (6) to the diameter of the front wheel is between 4-7.

## Patentansprüche

1. Elektrofahrzeug (1) mit einem Wetterschutz, wobei das Fahrzeug elektrische Antriebsmittel und Räder (5, 6) zum Bewegen des Fahrzeugs, Lenkmittel (10) und eine Karosserie (2, 3), die eine geschlossene Außenoberfläche mit einem offenen Bereich für einen Fahrer (9) an dem oberen Abschnitt der Karosserie definiert, und eine Wetterschutz-Stoffabdeckung (8) umfasst, die dazu angepasst ist, den offenen Bereich und den Fahrer, der sich in dem offenen Bereich befindet, mit Ausnahme des Kopfs des Fahrers zu bedecken, wobei
- die Karosserie (2, 3), die die geschlossene Außenoberfläche definiert, eine feststehende wettergeschützte Einheit mit einer konvexen durchgehenden Oberfläche an der Vorderseite des offenen Bereichs definiert, und mit einem vorragenden Bund, der den Rand des Rests des offenen Bereichs mindestens teilweise umgibt,
- das Lenkmittel eine Welle umfasst, die ein Vorderrad (5), das außerhalb der Karosserie (2, 3) liegt, und eine Lenkvorrichtung (10), die mindestens teilweise innerhalb der Karosserie liegt, verbindet, und
- die Außenoberfläche der Karosserie (2, 3) mit Mitteln (7) zum Befestigen der Wetterschutz-Stoffabdeckung (8) ausgerüstet ist, **dadurch gekennzeichnet, dass** die Welle in einem Winkel unter 45° in Bezug auf die horizontale Bodenebene geneigt ist.

2. Elektrofahrzeug (1) nach Anspruch 1, wobei das Mittel (7) zum Befestigen der Wetterschutz-Stoffabdeckung (8) den vorderen Umfang der Wetterschutz-Stoffabdeckung gegen die konvexe durchgehende Oberfläche an der Vorderseite des offenen Bereichs führt und strafft.

3. Elektrofahrzeug (1) nach Anspruch 1 oder 2, wobei ein biegsamer Abschnitt an dem Umfang der Wetterschutz-Stoffabdeckung (8) bereitgestellt ist.

4. Elektrofahrzeug (1) nach einem der Ansprüche 1 - 3, wobei die Wetterschutz-Stoffabdeckung (8) eine Öffnung für den Kopf des Fahrers (9) und auch separate Öffnungen für die Köpfe der Insassen umfasst.

5. Elektrofahrzeug (1) nach Anspruch 4, wobei jede der Öffnungen mit einer Haube (12) versehen ist.

6. Elektrofahrzeug (1) nach einem der Ansprüche 1 - 5, wobei die geschlossene Außenoberfläche der Karosserie (2, 3) des Elektrofahrzeugs (1) mit Ausnahme des offenen Bereichs für den Fahrer (9) wasserdicht ist.

7. Elektrofahrzeug (1) nach einem der Ansprüche 1 - 6, wobei das Elektrofahrzeug ein Dreirad ist.

8. Elektrofahrzeug (1) nach einem der Ansprüche 1 - 7, wobei der Winkel der Welle, die das Vorderrad (5) und die Lenkvorrichtung (10) verbindet, zwischen 30 und 42° liegt.

9. Elektrofahrzeug (1) nach einem der Ansprüche 1 - 8, wobei das Verhältnis der Breite des Vorderrades (5) zu dem Durchmesser des Vorderrades zwischen 2,5 und 3,5 liegt.

10. Elektrofahrzeug (1) nach einem der Ansprüche 1 - 9, wobei das Verhältnis des Abstands zwischen dem Vorderrad (5) und den Hinterrädern (6) zu dem Durchmesser des Vorderrads zwischen 4 und 7 liegt.

## Revendications

1. Véhicule électrique (1) avec une protection contre les intempéries, lequel véhicule comprend des moyens de propulsion électrique et des roues (5, 6) pour déplacer le véhicule, des moyens de direction (10) et une carrosserie (2, 3) définissant une surface extérieure fermée avec une zone ouverte pour un conducteur (9) au niveau de la partie supérieure de la carrosserie, et un couvercle en tissu de protection contre les intempéries (8) qui est adapté pour couvrir la zone ouverte et le conducteur situé dans la zone ouverte à l'exception de la tête du conducteur, dans lequel
- la carrosserie (2, 3) définissant la surface extérieure fermée forme une entité protégée contre les intempéries fixe avec une surface continue convexe à l'avant de la zone ouverte et avec un collier protubérant entourant au moins partiellement le contour du reste de la zone ouverte,
- les moyens de direction comprennent un arbre raccordant une roue avant (5) située à l'extérieur de la carrosserie (2, 3) et un dispositif de direction (10) situé au moins partiellement à l'intérieur du corps, et
- la surface extérieure de la carrosserie (2, 3) est équipée de moyens (7) pour fixer le couvercle en tissu de protection contre les intempéries (8), **caractérisé en ce que** ledit arbre est incliné à un angle de moins de 45° par rapport au niveau du sol horizontal.

2. Véhicule électrique (1) selon la revendication 1, dans lequel les moyens (7) pour fixer le couvercle en tissu de protection contre les intempéries (8) guide et resserre la périphérie avant du couvercle en tissu de protection contre les intempéries contre la surface continue convexe à l'avant de la zone ouverte.

3. Véhicule électrique (1) selon la revendication 1 ou 2, dans lequel une section flexible est prévue à la périphérie du couvercle en tissu de protection contre les intempéries (8).

4. Véhicule électrique (1) selon une quelconque des revendications 1 - 3, dans lequel le couvercle en tissu de protection contre les intempéries (8) comprend une ouverture pour la tête du conducteur (9) et aussi des ouvertures séparées pour les têtes des passagers.

5. Véhicule électrique (1) selon la revendication 4, dans lequel chacune des ouvertures sont pourvues d'un capuchon (12).

6. Véhicule électrique (1) selon une quelconque des revendications 1 - 5, dans lequel la surface extérieure fermée de la carrosserie (2, 3) du véhicule électrique (1) est étanche à l'eau à l'exception de la zone ouverte pour le conducteur (9).

7. Véhicule électrique (1) selon une quelconque des revendications 1 - 6, dans lequel le véhicule électrique est un tricycle.

8. Véhicule électrique (1) selon une quelconque des revendications 1 - 7, dans lequel l'angle de l'arbre raccordant la roue avant (5) et le dispositif de direction (10) est compris entre 30 et 42°.

9. Véhicule électrique (1) selon une quelconque des revendications 1 - 8, dans lequel le rapport de la largeur de la roue avant (5) au diamètre de la roue avant est compris entre 2,5 - 3,5.

10. Véhicule électrique (1) selon une quelconque des revendications 1 - 9, dans lequel le rapport de la distance entre la roue avant (5) et les roues arrières (6) au diamètre de la roue avant est entre 4 - 7.
